# EUROPEAN PATENT SPECIFICATION

(11) **EP 3 506 806 B1**
(45) Date of publication and mention of the grant of the patent: **24.05.2023**
(21) Application number: 17748782.4
(22) Date of filing: 04.08.2017
(51) Int. Cl.: A47J 27/04

(54) **COOKING APPLIANCE WITH STEAMER**
KOCHGERÄT MIT DÄMPFER
APPAREIL DE CUISSON COMPRENANT UN CUISEUR À VAPEUR

(30) Priority: 31.08.2016 CN 201621029863 U
(43) Date of publication of application: 10.07.2019
(73) Proprietor: SEB S.A., 69130 Ecully (FR)
(72) Inventor: MA, Chao, Hangzhou Zhejiang 310051 (CN)
(74) Representative: SEB Développement
(86) International application number: PCT/EP2017/069868
(87) International publication number: WO 2018/041537

(56) References cited:
- CN-A- 1 157 708
- CN-A- 105 816 009
- CN-U- 204 970 807
- US-A- 5 092 229

## Description

The present invention relates to the field of cooking equipment and in particular to a cooking appliance.

There are cooking appliances for producing cooked rice with low Glycemic index. The document CN105816009 A discloses a cooking appliance equipped with an internal pot, a steamer being arranged inside the internal pot, and an open top structure being disposed on the exterior of the bottom of the steamer. There is a separating cavity between the base of this open top structure and the bottom wall of the internal pot. The upper edge of the steamer is sealingly supported on the upper edge of the internal pot.

When the above described cooking appliance is used, during rice steaming and washing, the heating of the internal pot is controlled through a heating means. In this way, steam pressure can be generated in the sealed separating cavity between the steamer and the internal pot. This pressure forces water into the steamer to wash the rice and to allow the rice to absorb water. Finally, by controlling the heating of the internal pot, the rice is steamed to produce cooked rice with low Glycemic index.

The above cooking appliance has the following disadvantages: as the upper edge of the steamer is sealingly supported on the upper edge of the internal pot, the weight of the rice is only borne by the upper edge of the steamer, which can lead to deformation of the steamer.

The main objective of the present invention is to provide a cooking appliance that can address the problem of the steamer in cooking appliance of the prior art being prone to deformation.

Another objective of the present invention is to provide a rice cooker equipped with a reliable steamer which allows to produce a large amount of low Glycemic index cooked rice.

To achieve the above objective, the present invention provides a cooking appliance, which comprises an internal pot, a steamer that is housed within the internal pot, and a supporting structure that is connected with the steamer. The supporting structure is supported on the bottom wall of the internal pot, and the steamer and the internal pot are engaged in a sealed engagement. The external wall of the steamer and the internal wall of the internal pot forms a separating cavity. The steamer is provided with a water permeable area, and the supporting structure has an overflow channel that connects the separating cavity and the water permeable area.

The supporting structure comprises a supporting cylinder. An overflow outlet is provided on the wall of the supporting cylinder, such that the overflow outlet together with the internal cavity of the supporting cylinder forms the overflow channel. The cooking appliance also comprises a sealing ring, which is disposed between the circumferential external wall of the steamer and the circumferential internal wall of the internal pot. The water within said separating cavity can enter said steamer through said overflow channel and said water permeable area under the pressure generated within said separating cavity.

Further, the overflow outlet is a gap disposed on the end of the supporting cylinder.

Further, the vertical projected area of the water permeable area of the steamer is S1, the vertical projected area of the supporting structure is S2, and S2 is at least 0.05S1 and at most 1.5S1.

Further, S2 is at least 0.3S1 and at most 0.8S1.

Further, the supporting structure and the steamer are integrated in one unit.

Further, there is a height difference of H1 between the lowest point of the bottom wall of the internal pot and the highest point of the overflow outlet of the supporting structure, and H1 is at least 0.1H and at most 0.8H, where H is the height of the internal pot.

Further, there is a height difference of H2 between the lowest points on the bottom walls of the internal pot and steamer, and H2 is at least 0.1H and at most 0.8H, where H is the height of the internal pot.

Further, there is a height difference of H3 between the lowest point of the bottom wall of the steamer and the mouth of the internal pot, and H3 is at least 0.1H and at most 0.8H, where H is the height of the internal pot.

In the technical solution provided by the present invention, the supporting structure that is connected to the steamer is supported on the bottom wall of the internal pot, and the steamer is sealingly engaged with the internal pot. A separating cavity is formed between the external wall of the steamer and the internal wall of the internal pot. The steamer is provided with a water permeable area, and the supporting structure is provided with an overflow channel that is connected to the water permeable area. In this way, during the rice cooking process, the supporting structure and the bottom wall of the internal pot are in contact. The internal pot will bear the entire weight of the steamer and rice, which prevents the steamer from being deformed. Further, the water within the separating cavity can enter the steamer through the overflow channel and water permeable area to soak the rice. When rice comes into adequate contact with water, the rice will undergo water absorption.

The drawings constitute a portion of the description for further understanding of the present invention. These drawings illustrate the embodiments of the present invention and explain the principle of the present invention together with the description. They are not intended to limit the scope of the invention.

In the drawings:
FIG. 1 is a schematic cross-sectional view of a specific embodiment of the cooking appliance according to the present invention;
FIG. 2 illustrates the relative positions of the internal pot, steamer and supporting structure from FIG. 1;
FIG. 3 illustrates the relative positions of the projected area of the supporting structure and the projected area of the water permeable area of the steamer from FIG. 1;
FIG. 4 is the exploded view of the steamer, supporting structure and sealing ring from FIG. 1;
FIG. 5 is a schematic three-dimensional view of the sealing ring and the steamer in FIG. 1 while engaged;
FIG. 6 illustrates the relative positions of the internal pot, steamer and supporting structure from FIG. 1, just before water is pushed into the steamer under pressure; and
FIG. 7 illustrates the relative positions of the internal pot, steamer and supporting structure from FIG. 1, when the water in the internal pot is flowing into the steamer via the overflow channel.
wherein the aforementioned figures comprise following reference numbers:
10. internal pot; 20. steamer; 21. water permeable area; 30. supporting structure; 311. overflow outlet; 40. sealing ring; 50. external housing; 60. top cover.

Representative embodiments of the present invention are explained hereinafter with reference to the accompanying drawings.

It is to be understood that the following detailed description are exemplary and explanatory, and are intended to provide further explanation of the invention. Unless otherwise defined, all terms (including technical and scientific terms) used herein have the same meaning as commonly understood by one of ordinary skill in the art to which this invention belongs.

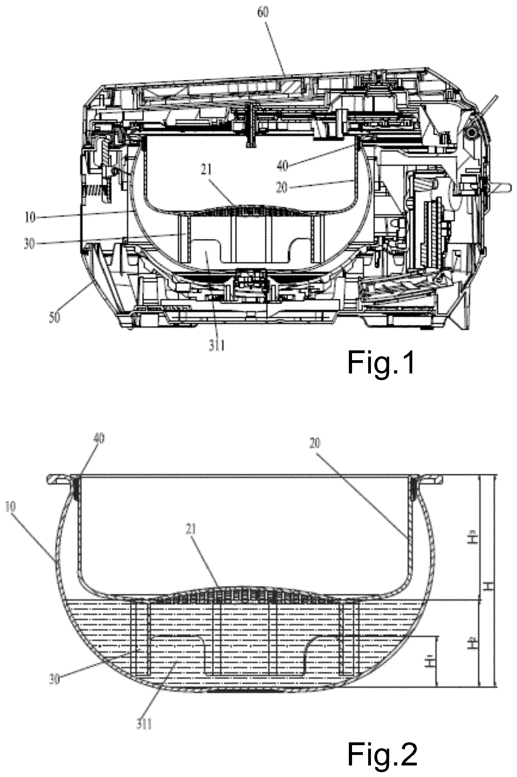

In the present invention, terms indicating orientation or direction, such as "up, down, top or bottom" are not intended to be absolute terms unless the context requires or indicates otherwise. These terms will normally refer to orientations shown in the drawings. Similarly, to facilitate understanding and description, "internal" and "external" refer to a positioning with respect to the boundary of the part itself. The above terms are not intended to restrict the scope of this invention. The present invention provides a cooking appliance that can address the problem of the steamer in cooking appliance of the prior art being prone to deformation. As shown in FIG. 1 and 2, the cooking appliance according to the present invention comprises internal pot 10, steamer 20 disposed within internal pot 10, and supporting structure 30 that is connected to steamer 20. Supporting structure 30 is supported on the bottom wall of the internal pot 10, and steamer 20 and internal pot 10 are engaged in a sealed engagement. The external wall of steamer 20 and internal wall of internal pot 10 forms a separating cavity. Steamer 20 is provided with water permeable area 21, and supporting structure 30 has an overflow channel that connects the separating cavity and water permeable area 21.

In this way, during rice cooking, supporting structure 30 is in contact with the bottom wall of internal pot 10, such that the weight of steamer 20 and the rice is borne by internal pot 10, which solves the problem of steamer 20 being prone to deformation. Further, water in the separating cavity enters steamer 20 through the overflow channel and water permeable area 21 to soak the rice. This allows the rice to come into adequate contact with water, and undergo water absorption.

As shown in FIG. 1, the cooking appliance according to the present invention further comprises a heating means for heating internal pot 10.

Optionally, the heating means is a heating device selected from the group comprising a heating plate, heating tube, IH electromagnetic heating device and heating film.

As shown in FIG. 1, in this embodiment of the invention, the cooking appliance further comprises external housing 50 and top cover 60. Internal pot (10) and the heating means are both housed within external housing 50. Top cover 60 is disposed on external housing 50.

Specifically, supporting structure 30 and steamer 20 are integrated in one unit. During use, steamer 20 with the supporting structure 30 is placed directly into internal pot 10. The operation is easy and the structure is simple.

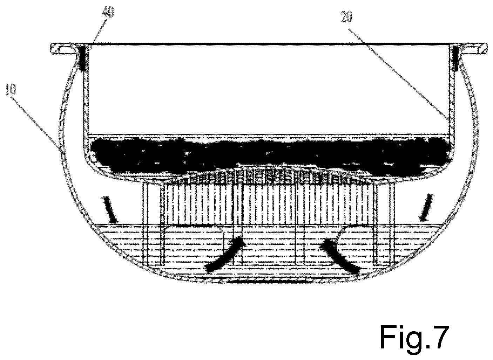

As shown in FIG. 1, 2, 6 and 7, specifically, the centre part of the bottom wall of steamer 20 protrudes upwards such that the bottom wall of steamer 20 is higher at its centre and lower at the edges. Thus, during rice steaming, the rising water in internal pot 10 can be prevented from coming into contact with the rice, and rice is cooked through steaming to produce rice of better taste.

Optionally, steamer 20 can be cylindrical, pyramidal, hexahedral or other shapes.

A plurality of water drainage holes disposed on the bottom wall of steamer 20 forms the above described water permeable area 21. Optionally, to ensure that the rice in steamer 20 will not escape through the water drainage holes, the cross-section of each water drainage hole can be circular, elliptical, rectangular or polygonal.

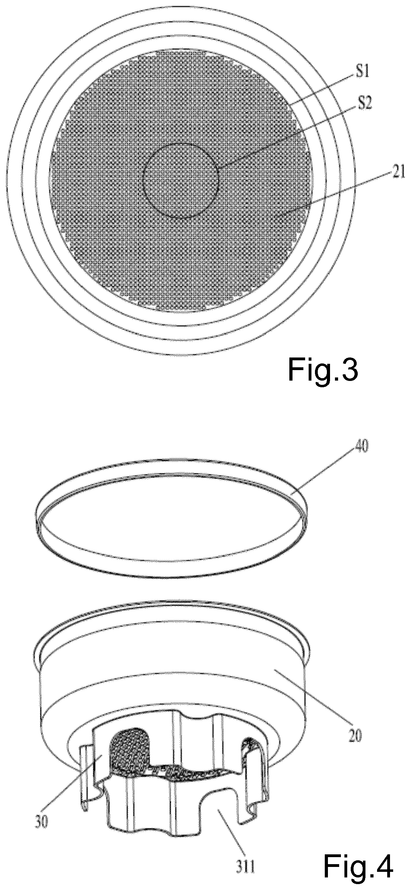

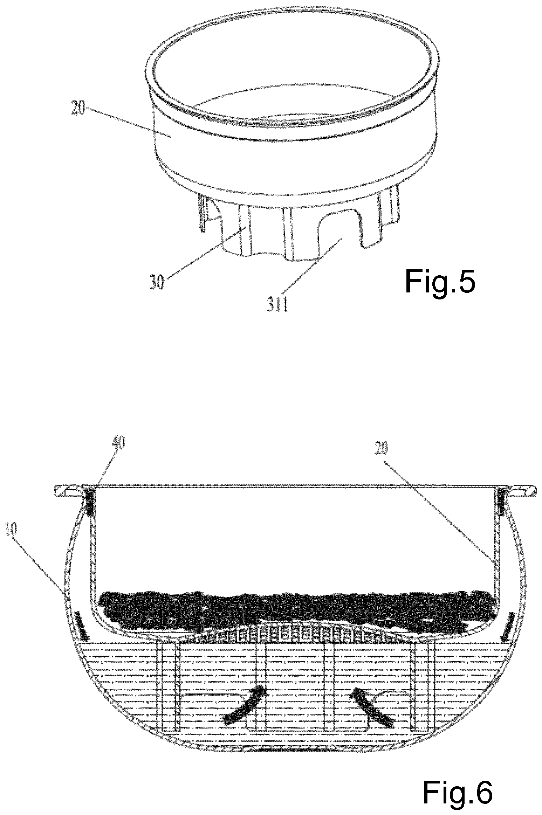

As shown in FIG. 4 and 5, in this embodiment of the present invention, supporting structure 30 comprises a supporting cylinder; and an overflow outlet 311 is disposed on the wall of the supporting cylinder, such that overflow outlet 311 together with the internal cavity of the supporting cylinder forms the overflow channel.

As shown in FIG. 4 and 5, overflow outlet 311 is a gap disposed on the end of the supporting cylinder. Overflow outlet 311 is directly in contact with internal pot 10 as a form of support. The weight of steamer 20 is borne by internal pot 10, which solves the problem of steamer 20 being prone to deformation when suspended.

In addition, there are cooking appliance in which a separating cavity exists between overflow outlet 311 at the base of steamer 20 and the bottom wall of internal pot 10. In this arrangement, the outlet is suspended. Hence, the air bubbles produced during the heating process will move along the internal wall of internal pot 10 to the two sides, and steam cannot enter steamer 20 vertically to steam the rice. To overcome this problem, in this specific embodiment of the present invention, overflow outlet 311 is in direct contact with the bottom wall of internal pot 10. In this manner, during rice steaming, water in the cylindrical internal cavity is enclosed by the contact between overflow outlet 311 and the bottom wall of internal pot 10. This effectively channels all the steam produced in the central region into steamer 20 through the water drainage hole to steam the rice.

As shown in FIG. 1 to 7, the cooking appliance according to this embodiment of the present invention also comprises sealing ring 40, and sealing ring 40 is disposed between the circumferential external wall of steamer 20 and the circumferential internal wall of internal pot 10. This effectively ensures that when pressure within the separating cavity between internal pot 10 and steamer 20 rises, steam can push water smoothly into steamer 20 through the overflow channel, and steam is prevented from escaping into the circumferential external wall of steamer 20 and the circumferential internal wall of internal pot 10.

Furthermore, through the above set-up, steamer 20 is disposed within internal pot 10, and sealing ring 40 is pressed against the internal wall of internal pot 10 to seal the cavity. There is no need to apply external pressure. This method of sealing is simple, effective and facilitates cleaning.

As shown in FIG. 3, in this embodiment of the present invention, the vertical projected area of water permeable area 21 of the steamer 20 is S1, the vertical projected area of supporting structure 30 is S2, and S2 is at least 0.05S1 and at most 1.5S1. Of course, when the pressure within the separating cavity between the internal wall of internal pot 10 and the external wall of steamer 20 rises, only a small amount of pressure is required to push the water smoothly into steamer 20.

Optionally, S2 is at least 0.3S1 and at most 0.8S1.

As shown in FIG. 2, in this embodiment of the present invention, there is a height difference of H1 between the lowest point of the bottom wall of internal pot 10 and the highest point of overflow outlet 311, and H1 is at least 0.1H and at most 0.8H, where H is the height of internal pot 10.

As shown in FIG. 2, in this embodiment of the present invention, to ensure that the bubbling rice milk in internal pot 10 does not come into contact with the rice during the rice steaming process, the lowest point of the bottom wall of internal pot 10 is at a distance H2 from the lowest point of the bottom wall of steamer 20, and H2 is at least 0.1H and at most 0.8H, where H is the height of the internal pot 10.

As shown in FIG. 2, in this embodiment of the present invention, there is a height difference of H3 between the lowest point of the bottom wall of steamer 20 and the mouth of internal pot 10, and H3 is at least 0.1H and at most 0.8H, where H is the height of internal pot 10.

The rice cooking process according to this specific embodiment is explained below:
In the first stage, place a specified amount of rice into steamer 20, at the same time, add a specified amount of water into internal pot 10; the amount of water to be added is determined based on the amount of rice added.

In the second stage, heating means heats up internal pot 10, and when the water in internal pot 10 boils, steam fills up the separating cavity between internal pot 10 and steamer 20 continuously. As the amount of steam increases, the pressure within the separating cavity rises, and this pushes water from internal pot 10 into steamer 20 through the outlet and water drainage hole disposed on the cylinder. In this way, rice comes into adequate contact with water, and the rice then undergoes water absorption and boiling.

In stage three, after the completion of water absorption, the amount of water remaining in internal pot 10 is reduced. At this time, pressure within the separating cavity is smaller and hence, is unable to continue to push water into steamer 20. A space is present between the water level and the bottom wall of steamer 20, which separates the rice and water. As a large amount of steam is accumulated during the water boiling process, rice steaming can follow immediately after water absorption. In this manner, the rice boiling and steaming processes are separated, which produces great-tasting cooked rice with adequate moisture content and well-defined grains.

The above are merely preferred embodiments, and are not intended to limit the present invention.

## Claims

1. Cooking appliance, wherein said cooking appliance comprises internal pot (10), steamer (20) that is housed within internal pot (10), and supporting structure (30) that is connected with steamer (20); said supporting structure (30) is supported on the bottom wall of said internal pot (10), said steamer (20) and said internal pot (10) are engaged in a sealed engagement, the external wall of said steamer (20) and the internal wall of said internal pot (10) forms a separating cavity, said steamer (20) is provided with a water permeable area (21), and said supporting structure (30) has an overflow channel that connects said separating cavity and said water permeable area (21), wherein said supporting structure (30) comprises a supporting cylinder, and an overflow outlet (311) is provided on the wall of said supporting cylinder; said overflow outlet (311), together with the internal cavity of said supporting cylinder, forms said overflow channel; wherein said cooking appliance further comprises sealing ring (40), and said sealing ring (40) is disposed between the circumferential outer wall of said steamer (20) and the circumferential inner wall of said internal pot (10) ; wherein the water within said separating cavity can enter said steamer (20) through said overflow channel and said water permeable area (21) under the pressure generated within said separating cavity.

2. Cooking appliance according to Claim 1, wherein said overflow outlet (211) is a gap disposed on the end of said supporting cylinder.

3. Cooking appliance according to any of the Claims 1 to 2, wherein the vertical projected area of said water permeable area (21) of said steamer (20) is S1, the vertical projected area of said supporting structure (30) is S2, and S2 is at least 0.05S1 and at most 1.5S1.

4. Cooking appliance according to Claim 3, wherein said S2 is at least 0.3S1 and at most 0.8S1.

5. Cooking appliance according to any of the Claims 1 to 2, wherein said supporting structure (30) and said steamer (20) are integrated in one unit.

6. Cooking appliance according to any of the Claims 1 to 2, wherein there is a height difference of H1 between the lowest point on the bottom wall of said internal pot (10) and highest point of the overflow outlet (311) of said supporting structure (30), and H1 is at least 0.1H and at most 0.8H, where H is the height of said internal pot (10).

7. Cooking appliance according to any of the Claims 1 to 2, wherein there is a height difference of H2 between the lowest point on the bottom wall of said internal pot (10) and the lowest point on the bottom wall of said steamer (20), and said H2 is at least 0.1H and at most 0.8H, where H is the height of said internal pot (10).

8. Cooking appliance according to any of the Claims 1 to 2, wherein there is a height difference of H3 between the lowest point on the bottom wall of said steamer (20) and the mouth of said internal pot (10), and said H3 is at least 0.1H and at most 0.8H, where H is the height of said internal pot (10).

## Patentansprüche

1. Kochgerät, wobei das Kochgerät einen internen Kochtopf (10) umfasst, einen Dämpfer (20), der innerhalb des internen Kochtopfes (10) eingehaust ist, und eine Halterungsstruktur (30), die mit dem Dämpfer (20) verbunden ist; wobei die Halterungsstruktur (30) an der Bodenwand des internen Kochtopfes (10) gehalten wird, der Dämpfer (20) und der interne Kochtopf (10) in einem abgedichteten Eingriff in Eingriff stehen, die Außenwand des Dämpfers (20) und die Innenwand des internen Kochtopfes (10) einen Trennungshohlraum bilden, der Dämpfer (20) mit einem wasserdurchlässigen Bereich (21) vorgesehen ist, und die Halterungsstruktur (30) einen Überströmkanal aufweist, der den Trennungshohlraum und den wasserdurchlässigen Bereich (21) verbindet, wobei die Halterungsstruktur (30) einen Halterungszylinder umfasst, und ein Übertrömauslass (311) an der Wand des Halterungszylinders vorgesehen ist; wobei der Überströmauslass (311) gemeinsam mit dem internen Hohlraum des Halterungszylinders den Überströmkanal bildet; wobei das Kochgerät weiter einen Dichtring (40) umfasst, und der Dichtring (40) zwischen der Außenumfangswand des Dämpfers (20) und der Innenumfangswand des internen Kochtopfes (10) angeordnet ist; wobei das Wasser innerhalb des Trennungshohlraumes unter dem Druck, der innerhalb des Trennungshohlraums erzeugt wird, durch den Überströmkanal und den wasserdurchlässigen Bereich (21) hindurch in den Dämpfer (20) eintreten kann.

2. Kochgerät nach Anspruch 1, wobei der Überströmauslass (311) ein Spalt ist, der am Ende des Halterungszylinders angeordnet ist.

3. Kochgerät nach einem der Ansprüche 1 bis 2, wobei der projizierte vertikale Bereich des wasserdurchlässigen Bereichs (21) des Dämpfers (20) S1 ist, der projizierte vertikale Bereich der Halterungsstruktur (30) S2 ist, und S2 mindestens 0,05 S1 und höchstens 1,5 S1 ist.

4. Kochgerät nach Anspruch 3, wobei S2 mindestens 0,3 S1 und höchstens 0,8 S1 ist.

5. Kochgerät nach einem der Ansprüche 1 bis 2, wobei die Halterungsstruktur (30) und der Dämpfer (20) in einer Einheit integriert sind.

6. Kochgerät nach einem der Ansprüche 1 bis 2, wobei ein Höhenunterschied von H1 zwischen dem niedrigsten Punkt an der Bodenwand des internen Kochtopfes (10) und dem höchsten Punkt des Überströmauslasses (311) der Halterungsstruktur (30) besteht, und H1 mindestens 0,1 H und höchstens 0,8 H ist, wobei H die Höhe des internen Kochtopfes (10) ist.

7. Kochgerät nach einem der Ansprüche 1 bis 2, wobei ein Höhenunterschied von H2 zwischen dem niedrigsten Punkt an der Bodenwand des internen Kochtopfes (10) und dem niedrigsten Punkt an der Bodenwand des Dämpfers (20) besteht, und H2 mindestens 0,1 H und höchstens 0,8 H ist, wobei H die Höhe des internen Kochtopfes (10) ist.

8. Kochgerät nach einem der Ansprüche 1 bis 2, wobei ein Höhenunterschied von H3 zwischen dem niedrigsten Punkt an der Bodenwand des Dämpfers (20) und der Mündung des internen Kochtopfes (10) besteht, und H3 mindestens 0,1 H und höchstens 0,8 H ist, wobei H die Höhe des internen Kochtopfes (10) ist.

## Revendications

1. Appareil de cuisson, dans lequel ledit appareil de cuisson comprend une cuve interne (10), un cuiseur à vapeur (20) qui est logé à l'intérieur de la cuve interne (10) et une structure de support (30) qui est reliée au cuiseur à vapeur (20) ; ladite structure de support (30) est supportée sur la paroi de fond de ladite cuve interne (10), ledit cuiseur à vapeur (20) et ladite cuve interne (10) sont en prise étanche, la paroi externe dudit cuiseur à vapeur (20), et la paroi interne de ladite cuve interne (10) forme une cavité de séparation, ledit cuiseur à vapeur (20) est pourvu d'une zone perméable à l'eau (21), et ladite structure de support (30) présente un canal de trop-plein qui relie ladite cavité de séparation et ladite zone perméable à l'eau (21), dans lequel ladite structure de support (30) comprend un cylindre de support, et une sortie de trop-plein (311) est prévue sur la paroi dudit cylindre de support ; ladite sortie de trop-plein (311), en conjugaison avec la cavité interne dudit cylindre de support, forme ledit canal de trop-plein ; dans lequel ledit appareil de cuisson comprend en outre une bague d'étanchéité (40), et ladite bague d'étanchéité (40) est disposée entre la paroi externe circonférentielle dudit cuiseur à vapeur (20) et la paroi interne circonférentielle de ladite cuve interne (10) ; dans lequel l'eau à l'intérieur de ladite cavité de séparation peut entrer dans ledit cuiseur à vapeur (20) à travers ledit canal de trop-plein et ladite zone perméable à l'eau (21) sous la pression générée à l'intérieur de ladite cavité de séparation.

2. Appareil de cuisson selon la revendication 1, dans lequel ladite sortie de trop-plein (311) est une fente disposée sur l'extrémité dudit cylindre de support.

3. Appareil de cuisson selon l'une quelconque des revendications 1 à 2, dans lequel la zone en saillie verticale de ladite zone perméable à l'eau (21) dudit cuiseur à vapeur (20) est S1, la zone en saillie verticale de ladite structure de support (30) est S2, et S2 est au moins de 0,05 S1 et au plus de 1,5 S1.

4. Appareil de cuisson selon la revendication 3, dans lequel ladite S2 est au moins de 0,3 S1 et au plus de 0,8 S1.

5. Appareil de cuisson selon l'une quelconque des revendications 1 à 2, dans lequel ladite structure de support (30) et ledit cuiseur à vapeur (20) sont intégrés dans une unité.

6. Appareil de cuisson selon l'une quelconque des revendications 1 à 2, dans lequel il existe une différence de hauteur de H1 entre le point le plus bas sur la paroi inférieure de ladite cuve interne (10) et le point le plus haut de la sortie de trop-plein (311) de ladite structure de support (30), et H1 est au moins de 0,1 H et au plus de 0,8 H, où H est la hauteur de ladite cuve interne (10).

7. Appareil de cuisson selon l'une quelconque des revendications 1 à 2, dans lequel il existe une différence de hauteur de H2 entre le point le plus bas sur la paroi inférieure de ladite cuve interne (10) et le point le plus bas sur la paroi inférieure dudit cuiseur à vapeur (20), et ladite H2 est au moins de 0,1 H et au plus de 0,8 H, où H est la hauteur de ladite cuve interne (10).

8. Appareil de cuisson selon l'une quelconque des revendications 1 à 2, dans lequel il existe une différence de hauteur de H3 entre le point le plus bas sur la paroi inférieure dudit cuiseur à vapeur (20) et la bouche de ladite cuve interne (10), et ladite H3 est au moins de 0,1 H et au plus de 0,8 H, où H est la hauteur de ladite cuve interne (10).
